(19) **Europäisches Patentamt European Patent Office Office européen des brevets**

(11) **EP 2 381 766 B1**

(12) **EUROPEAN PATENT SPECIFICATION**

(45) Date of publication and mention
of the grant of the patent:
**18.09.2013 Bulletin 2013/38**

(51) Int Cl.:
*A23B 7/16* (2006.01)       *A01K 45/00* (2006.01)

(21) Application number: **10701439.1**

(22) Date of filing: **26.01.2010**

(86) International application number:
**PCT/US2010/022048**

(87) International publication number:
**WO 2010/101679 (10.09.2010 Gazette 2010/36)**

(54) **METHODS AND COMPOSITIONS FOR TREATING FERTILIZED AVIAN EGGS**

VERFAHREN UND ZUSAMMENSETZUNGEN ZUR BEHANDLUNG VON BEFRUCHTETEN HÜHNEREIERN

PROCÉDÉS ET COMPOSITIONS POUR LE TRAITEMENT D' UFS AVIAIRES FÉCONDÉS

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **26.01.2009 US 147180 P**
**25.01.2010 US 692782**

(43) Date of publication of application:
**02.11.2011 Bulletin 2011/44**

(73) Proprietor: **E. I. du Pont de Nemours and Company**
**Wilmington, DE 19898 (US)**

(72) Inventors:
• **CAHILL, William, R., Jr.**
**Hockessin**
**Delaware 19707 (US)**
• **HOFFMANN, Christian**
**Newark**
**Delaware 19711 (US)**
• **LEGER, Donna, Lynn**
**Mississauga**
**Ontario L5M 5R3 (CA)**
• **MALONE, Shaun, Francis**
**Ajax**
**Ontario L1T 3X6 (CA)**
• **WILSON, Katherine, Lee**
**Georgetown**
**Ontario L7G 6E1 (CA)**
• **STRANGE, Phillip, Walker**
**Albertville**
**Alabama 35951 (US)**

(74) Representative: **Heinemann, Monica et al**
**Abitz & Partner**
**Patentanwälte**
**Postfach 86 01 09**
**81628 München (DE)**

(56) References cited:
**WO-A2-03/001921     WO-A2-2008/084485**

**Description**

FIELD OF THE INVENTION

This invention relates to methods for treating fertilized avian eggs to increase hatchery productivity.

BACKGROUND

There is an increasing demand for poultry and poultry eggs, including chickens, turkeys, ducks and geese. There is a strong desire in the industry to increase the productivity of farms producing eggs and meat; and hence, it is of great industrial importance to achieve greater production of quality avian eggs.

Breathing of a developing embryo during the incubation process occurs by the diffusion of gases through the egg shell. During incubation, an egg must lose a certain amount of its weight, mainly by the loss of water. The rate of water loss from an egg can influence the rate of embryonic development, pre-pipping oxygen consumption rate, metabolic rate and gas exchange.

Even in controlled laying and incubation conditions several problems may occur, which pose a significant predicament on the production of quality eggs and poultry. Poor results are most commonly encountered with improper control of temperature and/or humidity particularly during storage and shipping.

When the temperature or humidity is either too high or too low for a sufficient length of time, it creates severe changes in the shell condition and hence may cause abnormal growth and development of the embryo. Additional problems are encountered with improper ventilation, egg turning and sanitation of the environment. Moreover, penetration of the hatching egg shell by microorganisms results in embryonic mortality, weak egg shells, weak chicks, high chick mortality, and poor chick growth and quality.

Efforts to increase the productivity and hatchability of poultry eggs have included optimizing the environmental conditions during egg incubation, injecting antibiotics into eggs to control disease and/or treatment of the eggs with a fumigant or other type of disinfectant to reduce the number of microorganisms on the shell surface. In addition, sanitation of the hatchery building, hatchery equipment, egg transportation equipment, and the like, is critical to good hatchability and high quality hatchlings.

Certain methods of directly treating the shell of poultry eggs are known in the art. Some of these treatments include the application of an antimicrobial agent such as aqueous solutions of oxidizing agents without a film forming agent. While some of these treatments were shown to increase hatchability, the antimicrobial effect is short-lived and the treatment does not allow for antimicrobial protection during shipping or storage periods when microbial contamination of the eggs may occur. In addition, these treatments do not provide either a mechanical enforcement of the shell or an effective gas barrier during storage or shipping periods.

Spencer and Becker (in Washington Farm Electrification Committee, Annual Progress Report, 1970, Vol. 46, pp. 1-2) disclose plastic coatings for hatching eggs to maintain hatchability of eggs stored before incubation. Such coating materials included acrylic resin, hydropropylcellulose, and polyvinyl alcohol. None of the coating treatments in this study increased the productivity or hatchability over the control with statistical significance.

Xie et al., [J. Food Sci., 2002, 67: 280- 284] showed that coating of egg shells with edible materials such as soy or whey protein isolates, carboxymethyl cellulose, and wheat gluten increased the mechanical properties of the treated egg shell. This study suggested that such coatings may enhance the mechanical properties of egg shells and minimize egg microbial contamination. Wong et al. [Poultry Sci., 1996, 75: 417- 422] , describe shell coatings containing mineral oils, egg albumin, soy protein isolate, wheat gluten, and corn zein. These studies did not demonstrate increase in productivity or hatchability.

WO2008/084485 relates to a method for increased hatchability for hatchery eggs comprising treating the egg surface with various coating agents at low concentrations and incubating the eggs without prior rinse of the eggs.

Thus there is a recognized need to provide for increasing quality egg productivity during storage and shipping periods using simple efficient methodologies without causing adverse effects.

SUMMARY

The present invention addresses problems identified above with the following methods, and in particular, a method for treating hatchery eggs with a liquid coating composition comprising an aqueous solvent, a film-forming coating agent and a surfactant to form a coating on the egg which is left on the egg during storage and shipping periods, and which is rinsed and removed from the egg with an aqueous solvent prior to incubating the eggs for hatching.

The present invention comprises a method for increasing the productivity of fertilized avian eggs, said method comprising

a) treating the egg's outer surface with a liquid coating composition comprising:

    i. an aqueous solvent
    ii. a film-forming coating agent; and
    iii. one or more surfactants;

b) allowing said liquid coating composition to form a coating on the egg, and
c) rinsing the egg with an aqueous solution to remove the coating from the egg; and
d) incubating the egg under conditions to cause hatching to occur; wherein the productivity of said avian eggs is increased as compared to control eggs not treated as defined in (a) to (c).

In certain aspects the coating composition is applied to the egg at a temperature higher than the temperature of the outer surface of the egg, e.g., the liquid coating composition may be at least 5 °C higher than the temperature of the egg's outer surface.

DETAILED DESCRIPTION

When an amount, concentration, or other value or parameter is given either as a range, preferred range, or a list of upper preferable values and lower preferable values, this is to be understood as specifically disclosing all ranges formed from any pair of any upper range limit or preferred value and any lower range limit or preferred value, regardless of whether ranges are separately disclosed. Where a range of numerical values is recited herein, unless otherwise stated, the range is intended to include the endpoints thereof, and all integers and fractions within the range. It is not intended that the scope of the invention be limited to the specific values recited when defining a range.

The present invention is based on the finding that it is possible to increase the productivity of quality hatchery eggs by applying a coating to the outer surface of the eggs. The liquid coating compositions and methods described herein facilitate mechanical enforcement of the shell, protection against adverse environmental conditions, prevention of contamination, differentiation of egg parentage and allow for appropriate gas exchange during storage or shipping periods. Further, the coating is also readily removable before incubating the eggs for hatching such that incubation is not adversely affected by the coating. These properties provide for increases in overall productivity of the coated eggs as compared to untreated eggs, particularly over extended storage and shipping periods.

For clarity, terms used herein are to be understood as described herein or as such term would be understood by one of ordinary skill in the art of the invention. Additional, explanation of certain terms used herein, are provided below:

The term "hatchery eggs" as used herein refers especially to but not limited to poultry eggs, including for example chickens, turkeys, goose, ostrich, ducks, and quails. Preferably, the poultry eggs are chicken or turkey eggs.

The term "liquid coating composition" as used herein refers to the composition comprising an amount of aqueous solvent, a film-forming coating agent and one or more surfactants. The liquid coating composition may be applied to the outer surface of an egg and forms a coating on said surface. The coating may be readily removable and provides for increased productivity of the eggs after incubation for hatching.

The term "continuous" or "substantially continuous" in this context refers to a coating that covers the outer egg shell surface without, or substantially without, uncovered areas, coating defects, such as craters and holes.

The term "aqueous solvent" refers to any solvent and water (or just water) that facilitates application of the water dispersible coating agent and surfactant to the outer surface of the egg. The same aqueous solvent may be employed to rinse coated eggs to remove the coating as needed.

The terms "water soluble or water dispersible coating agent" or "film-forming coating agent" which may be used interchangeably herein refer to agents that form a film and are employed to provide protective coating to the outer surface of an egg. These agents are either water soluble or water dispersible. These agents are described in further detail below.

The term "surfactant" as used herein refers to commonly known chemical agents capable of reducing the surface tension of a liquid in which it is dissolved. In the present context it is believed that the surfactants may aid wetting of the surface to be covered and will aid even coverage by the film. Useful surfactants of the present invention are described in detail below and include silicone-based surfactants.

The term "silicone-based surfactant" are surfactant molecules containing one or more Si-C bonds or one or more Si-O-C linkages. Examples are silicone-polyol copolymers, trisiloxane ethoxylates, polyether-polydimethyl-siloxane-copolymers, diquatemary polydimethylsiloxanes, alkyl-polymethylsiloxane copolymers and polyalkyleneoxide modified heptamethyltrisiloxane.

The term "productivity" as used herein refers to successful incubation and hatching offertilized eggs resulting in healthy, high-quality, robust chicks. Contributing factors to productivity are hatchability and egg quality.

"Hatchability" as used herein is the percentage of fertile eggs that hatch independent of the quality of the eggs or the resulting chicks.

"Egg quality" refers to the quality of the fertile eggs and can be measured by Haugh units and albumen height, as described below.

The term "under conditions to cause hatching" refers to the standard conditions in which fertilized eggs are subjected to in order to cause hatching. These conditions include moderating temperature and humidity and are generally well-known by one of ordinary skill in the hatchery art.

The term "readily removable" as used herein refers to removing the coatings formed after application of the liquid coating composition to the outer surface of an egg. The coatings are removed with ease and may be removed by rinsing the egg with an aqueous solvent or solution. The aqueous solution may be any solution comprising about 60 to 100 % by weight water, with the remaining components being dissolved components. Dissolved components can include but are not limited to solvents such as alcohols, solubilizing agents, surfactants, safts, chelators, acids and bases.

Components of the Liquid Coating Composition:

The following provides a detailed description of the components of the compositions used in the present invention described herein.

Aqueous Solvents:

Inert solvents useful for the invention include water. Additional solvents that may be used include mostly water and additional components in low concentrations. The additional components may include: mono alcohols and monofunctional and polyfunctional alcohols preferably containing from about 1 to about 6 carbon atoms and from 1 to about 6 hydroxy groups. Examples include ethanol, isopropanol, n- propanol, 1, 2- propanediol, 1, 2- butanediol, 2- methyl- 2, 4- pentanediol, mannitol and glucose. Also useful are the higher glycols, polyglycols, polyoxides, glycol ethers and propylene glycol ethers. Additional components of the solvent solution may include free acids and alkali metal salts of sulfonated alkylaryls such as toluene, xylene, cumene and phenol or phenol ether or diphenyl ether sulfonates, alkyl and dialkyl naphthalene sulfonates and alkoxylated derivatives.

Film-forming coating agent:

The film-forming coating agent can be at least one of any agent, as described in detail below. These agents may be water soluble or water dispersible and are readily removable with an aqueous solvent. The coating is removable, for instance, when subjected to an aqueous solution treatment.

Examples of film-forming coating agents include, but are not limited to, polyvinyl alcohols, polyvinyl alcohol copolymers, polyvinyl pyrrolidones, polyacrylic acid, acrylate copolymers, ionic hydrocarbon polymers, and polyurethanes, or combinations thereof.

Preferably the film-forming coating agent is present at a level between 0.5 and 20 %, more preferably between 5 and 12 %, by weight of the liquid coating composition.

Polyvinyl alcohol and copolymers thereof:

Polyvinyl alcohol and copolymers thereof may be the film-forming coating agent of the liquid coating composition. Polyvinyl alcohol, also referred to as poly(vinyl alcohol), is made from polyvinyl acetate by hydrolysis. The physical properties of polyvinyl alcohol are controlled by the molecular weight and the degree of hydrolysis. The most commonly available grades of polyvinyl alcohol, ranked by degree of hydrolysis, are an 87-89% grade (containing 11-13 mole% residual vinylacetate units), a 96% hydrolysis grade (containing 4 mole% residual vinyl acetate units), and the "fully hydrolyzed" and "superhydrolyzed" grades, which are about 98% and greater-than-99% hydrolyzed, respectively. Lower degrees of hydrolysis (e.g. 74% and 79%) are also commercially available. Some preferred degrees of hydrolysis are greater than 85 mole%, or greater than 92 mole%. The polyvinyl alcohol component of the present invention can also be a copolymer of vinyl alcohol, such as one obtained by hydrolyzing a copolymer of vinyl acetate with small amounts (up to about 15 mole %) of other monomers. Suitable co-monomers are e.g. esters of acrylic acid, methacrylic acid, maleic or fumaric acids, itaconic acid, etc. Also, copolymerization of vinyl acetate with hydrocarbons e.g., alpha-olefins such as ethylene, propylene or octadecene, etc., with higher vinyl esters such as vinyl butyrate, 2-ethyl hexoate, stearate, trimethyl acetate, or homologues thereof ("VV-10" type of vinyl esters sold by Shell Chemical Company, Calgary, Alberta, Canada), and the like gives copolymers that can be hydrolyzed to suitable polyvinyl alcohol copolymers. Other suitable comonomers are N-substituted acrylamides, vinyl fluoride, allyl acetate, allyl alcohol, and the like. Also the free unsaturated acids such as acrylic acid, methacrylic acid, monomethyl maleate, and the like can act as comonomers.

Because of the variety of grades that are either known in the literature or commercially available, one skilled in the art can formulate a polyvinyl alcohol solution having an average degree of hydrolysis ranging from 74 to more than 99% simply by blending the known or commercial grades in any desired ratios. Accordingly, the term "partially hydrolyzed grade polyvinyl alcohol", as used in this description should be understood to include both a single grade and a mixture of grades, and the term "average degree of hydrolysis" should be understood to refer to the degree of hydrolysis arrived at by averaging (with appropriate weighting on the basis of proportions) the partially hydrolyzed grades in the mixture, if a mixture is used, or the average degree of hydrolysis of a single grade, if a single grade is used (an "88% grade", for example, may be the average of a spectrum ranging from 87 to 89% within the same grade).

Variation of liquid coating composition flexibility, water sensitivity, ease of solvation, viscosity, film strength and adhesion of the polyvinyl alcohol film can be varied by adjusting molecular weight and degree of hydrolysis. In one embodiment, the polyvinyl alcohol for use in the invention has a degree of hydrolysis from about 85% to greater than 99%. In another embodiment, the polyvinyl alcohol has a degree of hydrolysis from about 92% to greater than 99%. In one embodiment, the polyvinyl alcohol has a number-averaged molecular weight (Mn) that falls in the range of between about 4,000 to about 200,000 or about 4,000 to about 186,000, or 30,000 to about 186,000. In another embodiment, the polyvinyl alcohol has a molecular weight that falls in the range of between about 70,000 and 130,000. In another embodiment, the polyvinyl alcohol of various molecular weights can be blended to give the desired properties. In one embodiment, the polyvinyl alcohol is used at about 0.5 % to about 30 % by weight, preferably at about 0.5 % to about 20 % by weight, of the solution. In a more specific embodiment, the polyvinyl alcohol is used at about 1% to about 15% by weight of the weight of the liquid coating composition. In an even more specific embodiment, the polyvinyl alcohol is used at about 2 % to about 12 % by weight of the weight of the liquid coating composition.

Polyvinylpyrrolidone (PVP):

The film-forming coating agent of the liquid coating composition used in the present invention can contain PVP at a concentration of about 0.25 to about 50 % by weight. Suitable grades of PVP are available from International Specialty Products (Wayne, NJ, USA). Such grades include:

K-15, having a molecular weight range from about 6,000 to about 15,000;
K-30, having a molecular weight range from about 40,000 to about 80,000;
K-60, having a molecular weight range of about 240,000 to about 450,000;
K-90, having a molecular weight range from about 900,000 to about 1,500,000; and K-120, having a molecular weight range from about 2,000,000 to about 3,000,000. Mixtures of PVP's can be employed, as can combinations of PVP and other film-forming compounds.

The amount and molecular weight distribution of the PVP used will influence the viscosity, coverage, and cost of the final product. The viscosity should preferably be from about 20 to about 1000 centipoise, and more preferably from about 20 to 100 centipoise. Typically, lower molecular weight PVP will give a less viscous product than a higher molecular weight PVP at the same concentration. For a given concentration of PVP, as the molecular weight range increases, the viscosity will also increase. The present invention can employ PVP having any of a number of molecular weight ranges. For example, film-forming compositions can utilize the PVP grades K-15, K-30, K-60, K-90, or K-120 described above. It is preferred, however, to use PVP with a molecular weight distribution from about 15,000 to about 3,000,000. PVP having this molecular weight distribution typically gives a film-forming composition with a viscosity, which can be easily adjusted and washes off a surface easily with no visible signs of interaction with a painted surface. In a preferred embodiment, PVP with a molecular weight distribution from about 15,000 to about 3,000,000 is present at a concentration of from about 0.25% to about 40 % by weight. In another preferred embodiment, PVP with a molecular weight distribution from about 60,000 to about 1,200,000 is present at a concentration of from about 2% to about 30% by weight of the liquid coating composition.

Polyacrylate:

The film-forming coating agent of the liquid coating compositions used in the invention can also include an acrylate emulsion polymer. Preferred acrylate polymers are those composed of one or more copolymers of ethylenically unsaturated comonomers. The monomers useful in the compositions of the invention comprise one or more ethylenically unsaturated polar or non-polar, non-ionizing monomers and at least one ethylenically unsaturated carboxylic acid. The monomers can include more than one ethylenically unsaturated site and the suitable carboxylic acids preferably include one or more carboxyl groups. Suitable ethylenically unsaturated acids include acrylic, methacrylic, butenoic, maleic, fumaric, itaconic, and cinnamic acids as well as dimer acids such as acrylic and methacrylic dimer acids and combinations of the foregoing. Ethylenically unsaturated polar or non-polar, non-ionizing monomers include ethylenically unsaturated esters, ethylenically unsaturated nitriles, ethylenically unsaturated alcohols, aryl vinyl compounds and arylalkyl vinyl compounds. Based on commercial availability, the acrylate polymers are preferably copolymers of acrylic acid esters and methacrylic acid esters, such as $C_1$ to $C_6$ alkyl acrylates or methacrylates, in combination with acrylic or methacrylic acid, cyanoacrylates and methacrylates (e.g., acrylonitrile) and other known acrylic, vinyl and diene monomers. The acrylate polymer component can optionally contain one or more metal salt complexing agents effective as cross-linking agents. When present such complexing agents bond with the pendant carboxyl groups on the acrylate polymers to form a cross-linked polymer, which is more water resistant than a comparable acrylate polymer which is not cross-linked. Suitable metal salt complexing agents include those containing zinc such as zinc ammonium carbonate, for example. Other useful complexing agents include known salts of various metals including zirconium, calcium, magnesium and the transition metals, for example. Exemplary complexing agents include polyvalent metal complexes such as ammonium zinc carbonate, ammonium calcium ethylenediamine carbonate, ammonium zinc acetate, ammonium zinc acrylate, ammonium zinc maleate, ammonium zinc amino acetate and ammonium calcium aniline and combinations of the foregoing.

Commercially available carboxylated acrylate polymer emulsions can be used either alone or in combination with one another in the film-forming compositions of the invention. Suitable commercial emulsions include those with a metal complexing agent as described above as well as those without added metal complexing agents. Suitable metal free emulsions include commercially available materials such as those available under the trade names of "Rhoplex" NT 2624 (Rohm and Haas Company, Philadelphia, PA); "Esi-Cryl" 20/20 (Emulsion Systems, Valley Stream, NY, USA); and "Syntran" 1905 (Interpolymer of Canton, MA, USA). Commercial emulsions which include a zinc complexing agent suitable for inclusion in the compositions of the invention include those available under the trade designations "Duraplus" I and "Rhoplex" B-825 (both from Rohm and Haas), "Conlex" V (Morton International, Chicago, IL, USA) and "Esi-Cryl" 2000 (Emulsion Systems Ltd., Valley Stream, NY, USA). Other metal containing and metal free acrylate emulsions can be used, as known by those skilled in the art.

The acrylate polymer component is preferably prepared as an emulsion and is present in the film-forming composition of the invention at a concentration ranging from about 0.25 to about 30 % by weight, and more preferably from about 2 to about 20 % by weight based on total weight of the liquid coating composition.

Surfactants:

The compositions useful for the present invention can also contain one or more surfactants. While not being bound by theory, it is believed that a surfactant will aid wetting of the surface to be covered and will aid even coverage by the film. Suitable surfactants include silicone-based surfactants. Further, the surfactants provide for surface tension of the coating composition from about 20 to about 50 mN/m, preferably from about 30 to about 45 mN/m. Surfactants may include any surface acting agents, including, but are not limited to: amphoteric surfactants, such as Amphoteric N from Air Products (Allentown, PA, USA); silicone surfactants, such as BYK 348 available from BYK Chemie (BYK-Chemie GmbH, Wesel, Germany); fluorinated surfactants such as Zonyl® FS300 from E. I. du Pont de Nemours and Company (Wilmington, DE, USA); and nonylphenoxypolyethoxyethanol based surfactants, such as Triton N-101 available from Dow Chemical (Midland, MI, USA). Other suitable surfactants include ethoxylated decynediols such as Surfynol 465 available from Air Products & Chemicals (Allentown, PA, USA); alkylaryl polyethers such as Triton CF-10 available from Dow; octylphenoxy polyethoxy ethanols such as Triton X-1 00 available from Dow; ethoxylated alcohols such as Neodol 23-5 or Neodol 91-8 available from Shell (The Hague, the Netherlands); Tergitol 15-S-7 available from Dow, Steol-4N, a 28% sodium laureth sulfate from Stepan Company (Northfield, IL, USA), sorbitan derivatives such as Tween 20 or Tween 60 from Uniqema (New Castle, DE, USA), and quaternary ammonium compounds, such as benzalkonium chloride. Other suitable surfactants include organo-silicone surfactants such as Silwet®L-77 from Setre Chemical Company (Memphis, TN, USA), DowCorning® Q2-5211 from DowCorning Silicones (Midland, MI, USA), or Silsurf® A008 by Siltech Corporation (Toronto, ON, Canada). The preferred range for use of the surfactant is from about 0.001 to about 1 % by weight of the liquid coating composition, more preferably from about 0.001 to about 0.5 % by weight, and even more preferably from about 0.01 to about 0.2 % by weight.

Additional components:

Additional components that can be added to the liquid coating composition include antimicrobial agents, colorants (dyes), rheology modifiers, cross-linking agents, plasticizers, solubilizing agents, antioxidants, pH adjusters, wetting agents, antifoaming agents, extenders, processing aids, and additional performance-enhancing agents.

Antimicrobial agent:

The antimicrobial agent useful for the invention can be either an inorganic or organic agent, or a mixture thereof. The invention is not to be limited to the selection of any particular antimicrobial agent, and any known water- soluble or water- dispersible antimicrobial may be included in the compositions used in the invention such as antimicrobials, mildewcides, antiseptics, disinfectants, sanitizers, germicides, algicides, antifouling agents, preservatives, and combinations of the foregoing and the like, provided that the antimicrobial agent is chemically compatible with other components in the composition. Suitable classes of antimicrobial agents are described below. The term "inorganic antimicrobial agent" used herein is a general term for inorganic compounds which contain a metal or metal ions, such as silver, zinc, copper and the like which have antimicrobial properties. The term "organic antimicrobial agent" used herein is the general term for natural extracts, low molecular weight organic compounds and high molecular weight compounds all of which have antimicrobial properties and which generally contain nitrogen, sulfur, phosphorus or like elements. Examples of useful natural antimicrobial agents are chitin, chitosan, antimicrobial peptides such as nisin, lysozymes, wasabi extracts, mustard extracts, hinokitiol, tea extracts and the like. High molecular weight compounds having anti- microbial properties include those having an ammonium salt group, phosphonium salt group, sulfonium salt group or like onium salts, a phenylamide group, diguanide group attached to a straight or branched polymer chain, for example phosphonium salt-containing vinyl polymers, as are known in the art (E.- R. Kenawy and Y. A.- G. Mahmoud "Biologically active polymers, 6: Synthesis and antimicrobial activity of some linear copolymers with quaternary ammonium and phosphonium groups" in Macromol. Biosc., 3: 107- 116, 2003) . Examples of useful low molecular weight antimicrobial agents include chlorhexidine, chlorhexidine gluconate, glutaral, halazone, hexachlorophene, nitrofurazone, nitromersol, thimerosol, C1- C5- parabens, hypochlorite salts, clofucarban, clorophen, phenolics, mafenide acetate, aminacrine hydrochloride, quaternary ammonium salts, chlorine and bromine release compounds (e.g. alkali and alkaline earth hypochlorites and hypobromites, isocyanurates, chlorinated derivatives of hydantoin, sulfamide, amine, etc.) , peroxide and peroxyacid compounds (e.g. peracetic acid, peroctanoic acid) , protonated short chain carboxylic acids, oxychlorosene, metabromsalan, merbromin, dibromsalan, glyceryl laurate, sodium and/or zinc pyrithione, trisodium phosphates, (dodecyl) (diethylenediamine) glycine and/or (dodecyl) (aminopropyl) glycine and the like. Useful quaternary ammonium salts include the N- C10- C24- alkyl-N- benzyl- quaternary ammonium salts which comprise water solubilizing anions such as halide, e.g., chloride, bromide and iodide; sulfate, methosulfate and the like and the heterocyclic imides such as the imidazolinium salts. Useful phenolic germicides include phenol, m- cresol, o- cresol, p- cresol, o- phenyl- phenol, 4- chloro- m- cresol, chloroxylenol, 6- n-amyl- m- cresol, resorcinol, resorcinol monoacetate, p- tert- butylphenol and o- benzyl- p- chlorophenol. Useful antimicrobial agents known to be effective in preventing the visible growth of mildew colonies, include, for example, 3- iodo- 2- propynl butylcarbamate, 2- (4- thiazolyl) benzimidazole, diiodomethyl- p- tolylsulfone, tetrachloroisophthalo- nitrile, the zinc complex of 2- pyridinethiol- 1- oxide (including salts thereof) as well as combinations of the foregoing. The typical concentration of the antimicrobial agent in the liquid coating composition ranges from 0.001 to 0.5 % by weight, more preferably from 0.001 to 0.2 % by weight.

Colorants or Dyes:

Colorants useful for the present invention include dyes and pigments such as food grade pigments. Dyeing eggs has industrial applicability for differentiation for chick lines. Specifically certain dye colors may be added to the liquid coating composition to differentiate chicks from certain parentage or for other purposes such as indicating or differentiating egg treatments or for indicating which eggs have been coated.

Dyes useful for the invention include both water soluble and water insoluble dyes. Water soluble dyes can be formulated easily in the aqueous systems of the invention. Water insoluble dyes can be included in an oil phase that can be dispersed or suspended in the antimicrobial coating compositions useful for the invention. Useful dyes for the purpose of this invention are typically organic compounds that absorb visible light resulting in the appearance of a detectable color. Fluorescent dyes can also be used, for example, for purposes of visualizing a film by ultraviolet light.

The dyes typically useful in this invention are colorants approved for use in foods, drugs, cosmetics and medical devices. Colorants currently in use and their status follow. Colorants permitted in foods that are (1) subject to certification: FD&C Blue No. 1, FD&C Blue No. 2, FD&C Green No. 3, FD&C Red No. 3, FD&C Red No. 40, FD&C Yellow No. 5, FD&C Yellow No. 6, Citrus Red No. 2, and Orange (B) (2) exempt from certification: annatto extract, theta- apo- 8'- carotenal, canthaxanthin, caramel, theta- carotene, carrot oil, cochineal extract (carmine) , corn endosperm oil, dehydrated beets (beet powder) , dried algae meal, ferrous gluconate, fruit juice, grape color extract, grape skin extract, paprika, paprika oleoresin, riboflavin, saffron, synthetic iron oxide, tagetes meal and extract, titanium dioxide, toasted partially defatted cooked cottonseed flour, turmeric, termeric oleoresin, ultramarine blue, and vegetable juice. Also useful are colorants permitted in drugs (including colorants permitted in foods) that are (1) subject to certification: FD&C Red No. 4, D&C Blue No. 4, D&C Blue No. 9, D&C Green No. 5, D&C Green No. 6, D&C Green No. 8, D&C Orange No. 4, D&C Orange No. 5, D&C Orange No. 10, D&C Orange No. 11, D&C Red No. 6, D&C Red No. 7, D&C Red No. 17, D&C Red No. 21, D&C Red No. 22, D&C Red No. 27, D&C Red No. 28, D&C Red No. 30, D&C Red No. 31, D&C Red No. 33, D&C Red No. 34, D&C Red No. 36, D&C Red No. 39, D&C Violet No. 2, D&C Yellow No. 7, D&C Yellow No. 8, D&C Yellow No. 10, D&C Yellow No. 11, and Ext. D&C Yellow No. 7. Additionally cantaxanthin, beta carotene, chlorophyllin, and other colors are known. For a more detailed listing and/or discussion on approved colors, see D. M. Marmion, Handbook of U.S. Colorants, Foods, Drugs, Cosmetics and Medical Devices, John Wiley & Sons Inc., New York (1991) and U.S. Code of Federal Regulations, Title 21, parts 70- 82.

Additional performance-enhancing agents:

In addition to the foregoing components, the composition used in the present invention can also comprise one or more performance enhancing additives which provide for quality coating characteristics.

These include defoamers recommended for water-based systems, to prevent unwanted foaming (gas bubbles) of the liquid coating composition during application or after formation of the film or coating. Too much foam can disrupt the required continuous film formation of the product.

To provide increased flexibility and integrity of the coating it may be desirable to add a suitable plasticizing agent such as polyethylene glycol or glycerol to the coating formulation. Other plasticizers suitable for the invention include, but are not limited, to solvents, polyols, polyethylene glycols of an average molecular weight from about 200 to about 800 g/mole and sorbitol. The preferred plasticizer amount is from about 1.0 % by weight to about 20 % by weight of the weight of the liquid coating composition, and more preferably from about 5 % by weight to about 8 % by weight.

The composition useful for the invention can also contain one or more rheology modifiers, or rheology agents, employed to enhance viscosity, or thicken the composition and cause the aqueous treatment or coating composition to prevent dripping or sagging of the applied coating liquid. Water soluble or water dispersible rheology modifiers that are useful can be classified as inorganic or organic. The organic thickeners can further be divided into natural and synthetic polymers with the latter still further subdivided into synthetic natural- based and synthetic petroleum- based. Inorganic thickeners are generally compounds such as colloidal magnesium aluminum silicate (VEEGUM®) , colloidal clays (Bentonites) , or silicas (CAB- O- SIL®) which have been fumed or precipitated to create particles with large surface to size ratios. Natural hydrogel thickeners of use are primarily vegetable derived exudates. For example, tragacanth, karaya, and acacia gums; and extractives such as carrageenan, locust bean gum, guar gum and pectin; or, pure culture fermentation products such as xanthan gum are all potentially useful in the invention. Chemically, all of these materials are salts of complex anionic polysaccharides. Synthetic natural- based thickeners having application are cellulosic derivatives wherein the free hydroxyl groups on the linear anhydro- glucose polymers have been etherified or esterified to give a family of substances which dissolve in water and give viscous solutions. This group of materials includes the alkyl and hydroxyalkylcelluloses, specifically methylcellulose, hydroxyethylmethylcellulose, hydroxypropylmethylcellulose, hydroxybutylmethylcellulose, hydroxyethylcellulose, ethylhydroxyethylcellulose, hydroxypropylcellulose, and carboxymethylcellulose. Another preferred group of thickeners include polyacrylates such as the proprietary Acusol thickeners, (e.g. Acusol 823, Rohm and Haas, Philadelphia, PA, USA) , and Carbopol thickeners, such as Carbopol 934 or Carbopol Aqua- 30 Polymer (B. F. Goodrich, Cleveland, OH, USA) . A polyacrylate thickener can be used at concentrations of up to about 3 % by weight of the film former weight. Mixtures of thickening agents can also be employed where the total amount can be up to about 3 % by weight depending on the thickeners used and the desired viscosity of the final product. Other potential thickeners for this application include dextrin, cornstarch and hydrous magnesium silicates, such as sodium magnesium silicate sold under the trade name Laponite XLG (Southern Clay Products, Inc., Gonzales, TX, USA) .

Additional optional performance enhancing additives include antioxidants to increase the shelf life of the coating formulation. One example is butylated hydroxytoluene.

Small amounts (typically less than 1 % by weight) of these additional materials can be added with an appropriate adjustment of the water or other components. It is to be understood that mixtures of any one or more of the foregoing optional components can also be employed. Table 1 below summarizes certain formulations that may be compositions of the invention and include concentration ranges for functional components of liquid coating compositions according to this invention. The amounts of these components may be varied (wt% is by weight of the liquid coating composition).

TABLE 1

Liquid coating compositions and Functional Components

| Function | Chemical name | Example compound | Approximate ranges (wt%) |
|---|---|---|---|
| Coating agent | Polyvinyl alcohol | Elvanol® 51-04 | 0.5 to 20 |
| Surfactant | Silicone-based surfactant | Silwet L-77 | 0.001 to 0.5 |
| Plasticizer | Polyethylene glycol | PEG-300 | 0.1 to 4 |
| Antimicrobial agent and/or preservative | Quaternary ammonium compound | BTC®885 | 0.001 to 0.5 |
| Colorant | FD&C Blue No.1 | FD&C Blue No.1 | 0.001 to 0.1 |
| Diluent | Water | Deionized water | Remainder |

Applying the coating composition:

The liquid coating composition can be applied to the egg by any means, including pouring, dipping and spraying. The egg can be rinsed one or more times with an aqueous solvent prior to the application of the liquid coating composition of the present invention. The film or coating is applied to achieve a continuous and/or homogenous layer on the egg. In one embodiment of the invention, electrostatic sprayers can be used to coat the surface. Electrostatic sprayers impart energy to the aqueous coating composition via a high electrical potential. This energy serves to atomize and charge the aqueous coating composition, creating a spray of fine, charged particles. Electrostatic sprayers are readily available from suppliers such as Tae In Tech Co., South Korea and Spectrum, Houston, TX, USA.

An airless spray nozzle or spray gun can be used to coat the target surface. Airless spray nozzles or guns use high fluid pressures rather than compressed air, to convey and atomize the liquid. The liquid is supplied by a fluid pump at pressures typically ranging from 30 to 450 bars. When the coating liquid exits the fluid nozzle at this pressure, it expands slightly and atomizes into tiny droplets without the impingement of atomizing air. The high velocity of the exiting coating liquid propels the droplets toward the target surface.

The atomization of the coating solution is chosen such that a thin film is applied homogeneously to the target area, such as the outer surface of an egg shell.

Generally, the coating is allowed to set or dry for about greater than 5 minutes in order to form the film. The coating may be removed before it is dried or anytime thereafter depending on the desired use. The drying time will be partially dependent on a number of factors, including environmental conditions such as humidity and temperature. The drying time will also depend on the thickness of the applied coating.

The thickness of the applied and dried film will depend on a variety of factors. These factors include the concentration of the film forming agent, the concentration of rheology control additives and/or other additives, as well as the application temperature and humidity. Film thickness and film uniformity also depend, at least in part, on parameters of the application equipment, such as fluid delivery, spray orifice diameter, air pressure or piston pump pressure in the case of airless application, and the distance of the spray applicator to the target surface. Therefore, the liquid formulation may be adjusted to yield the desired film thickness. Desired thickness may be from about 0.0005 to about 0.1 mm. It is also desired that the coating be applied such that it is substantially continuous.

The liquid coating composition should be applied at temperatures warmer than the egg. If the temperature of the liquid coating composition is less than the temperature of the egg, the coating solution can be drawn into the egg possibly contaminating the egg. Normally, the temperature of the liquid coating solution is approximately at least about 5 °C warmer than the eggs. Depending on the temperature of the eggs, the temperature of the coating solution could be from about 15 °C to about 56°C. The coating temperature also provides for ease of application as it facilitates lowering the viscosity during application. This provides for ease of applying a substantially continuous coating which facilitated achieving an increase in egg productivity. The temperature of the solution also impacts the thickness of the coating as cooler solutions will be more viscous and leave a thicker coating. Preferably, the coating composition is applied to avian eggs from 0 (immediately) to about 72 hours after being laid.

Removing the Liquid Coating Composition:

The liquid coating compositions once applied to the outer surface of an egg forms a protective film over the egg. This film or coating is readily removable. The egg coating is rinsed with an aqueous solution to remove the coating prior to incubating the eggs for hatching. The rinse can be achieved by the application of an aqueous solution onto the coating. The application of the solution, or water, can be achieved by a simple rinse or spray on the eggs. The rinse can also be achieved by use of a spray nozzle facilitating the rinse by additional mechanical forces. Further, mild additives can be utilized or mixed with the aqueous solution to help solubilize or disperse the film-forming or water-dispersible agents, including commonly used acids or bases, chelators or detergents. The rinse can also be conducted by an automated or robotic system.

The same rinse may be applied to the outer surface of an egg shell prior to application of the liquid coating composition. This "pre-rinse" may help facilitate removing contaminants or dirt and prepare egg for application of the liquid coating composition.

Egg Productivity:

The methods and compositions described herein provide for increased hatchery productivity. Increased productivity refers to increasing the hatchability, viability, health, robustness and survivability of chicks after storage and shipping the eggs, which may include adverse conditions. The mechanism for increased productivity includes mechanical enforcement of the egg shell and protection against contamination and adverse environmental conditions by the liquid coating composition without adverse effects on incubation or egg quality.

Quality and productivity may be measured both qualitatively and quantitatively. Albumen height is an indicator of the health of the egg. The denser the albumen, the higher the yolk sits in the egg indicating a healthier egg. Using the albumen height as a measurement, the methods and compositions described herein are shown to provide for increased quality of eggs and thereby an increase in egg productivity particularly over storage and shipping periods of varying lengths of time.

The Haugh unit is an indicator of the internal quality of an egg. A higher number means better quality of the egg.

The Haugh unit (HU) is defined as follows:

$$HU = 100 \log_{10} (h - 1.7w^{0.37} + 7.6)$$

Where: h = observed height of the albumen in millimeters and w = weight of egg in grams.

Using the Haugh units, the methods and compositions described herein is shown to provide for increased quality of eggs and thereby an increase in egg productivity, particularly over storage and shipping periods of varying lengths of time.

Storage and shipping is integral to egg hatchery business. The hatchery business, including breeding of chickens, has changed appreciably in the last 50 years. It used to be that the birds were grown locally and hatched locally, therefore the need for storage was minimal. Storage and shipping periods may be defined as the time between the egg being laid and put into a setter. During the storage and shipping periods, the eggs should be kept at a constant temperature between 12 °C and 20 °C. Included in this time period are storage at the farm, transportation to a distribution center, storage at the distribution center, possibly transportation to a hatchery, and storage at the hatchery until the eggs are set. Locations of these various storage, shipping and transportation centers may be quite distant, even on different continents. Maintaining or increasing egg productivity during storage and shipping is thus an ever increasing need for hatchery success. In the method of the present invention, the coated eggs can be stored from 1 to about 30 days prior to incubating the eggs for hatching.

All of the methods and compositions disclosed herein can be made and executed without undue experimentation in light of the present disclosure. While the methods and compositions of the present disclosure have been described in terms of various aspects of the invention and preferred embodiments, it will be apparent to those of skill in the art that variations can be applied to the compositions and methods and in the steps or in the sequence of steps of the method described herein without departing from the scope of the invention, as defined in the appended claims. More specifically, it will be apparent that certain agents, which are chemically related, can be substituted for the agents described herein while the same or similar results would be achieved. All such similar substitutes and modifications apparent to those skilled in the art are deemed to be within the scope of the invention as defined by the appended claims.

EXAMPLES

The present invention is further defined in the following Examples. It should be understood that these Examples, while indicating certain preferred embodiments of the invention, are given by way of illustration only. From the above discussion and these Examples, one skilled in the art can ascertain the essential characteristics of this invention, and without departing from the spirit and scope thereof, can make various changes and modifications of the invention to adapt it to various uses and conditions.

Abbreviations:

In the following Examples, "degrees Celsius" is abbreviated "°C", "milliPascalseconds" is abbreviated "mPas", "milligrams" is abbreviated "mg", "liters" is abbreviated "L", "millimeters" is abbreviated "mm", "revolutions per minute" is abbreviated "RPM", "not determined" is abbreviated "n.d.", "weight percent" is shown by "wt%", "percent' is shown by "%", "mole percent" is shown by "mole%", "milli-Newtons per meter" is shown by "mN/m", "gram per mole" is shown by "g/mol". Chemical suppliers:

Elvanol® 51-04 was from E. I. du Pont de Nemours and Company (Wilmington, DE, USA). Polyethylene glycol 300 was from Dow Chemical (Midland, MI, USA). FD&C Blue No. 1 dye was from Pylam Products (Tempe, AZ, USA). BTC®885 was from Stepan Company (Northfield, IL, USA). Silwet L-77 was from Setre Chemical Company (Memphis, TN, USA).

EXAMPLE 1

The liquid coating composition can be applied in a number of ways. The quality of the coating formed will be a function of the temperature of the coating solution, the viscosity of the coating solution and the temperature of the egg surface. The warmer the coating solution is, the less viscous it is and the thinner the coating may be. As the solution is cooled, the coatings form a film of varying thickness. The amount of certain components of the liquid coating composition may affect the viscosity of the liquid coating composition. This affect can be utilized to benefit the coating properties so that the appropriate coating can be applied to the outer surface of the egg to increase productivity.

Liquid coating compositions A, B, and C were generated and viscosity of these compositions were measured at 20°C and 50 RPM using a Brookfield viscometer, model DV-II+Pro and spindle No. SC-18 (Brookfield Engineering Laboratories, Inc., Middleboro, MA, USA).

The surface tensions of the liquid coating compositions B and C were measured at 24°C by the Wilhelmy plate method using a KRUSS K11 tensiometer (Kruss, Hamburg, Germany). The reported surface tension values are averages of ten individual measurements.

Table 2 illustrates how the amount of Elvanol® 51-04 (the film-forming coating agent) effects the viscosity and the surface tension of the liquid coating composition. The surface tension of the coating compositions B and C are in the range of 48-52% of the surface tension of water lacking any surfactant.

TABLE 2

Viscosity and surface tension of liquid coating compositions

| Ingredient | Concentration (wt%) | | |
|---|---|---|---|
| | Coating A | Coating B | Coating C |
| Elvanol® 51-04 | 1.0 | 6.0 | 9.0 |
| Polyethylene glycol 300 | 3.0 | 3.0 | 3.0 |
| Silwet L-77 | 0.02 | 0.02 | 0.02 |
| BTC® 885 | 0.15 | 0.15 | 0.15 |
| Deionized water | remainder | remainder | remainder |
| Viscosity in mPas | 1.8 | 11.1 | 30.1 |
| Surface tension in mN/m | n.d. | 35.3 | 37.8 |

EXAMPLE 2

849 broiler breeder hatching eggs (Heritage X) were used in the test. The eggs were laid 1 day before. The eggs were scrutinized for quality (usually eggs with cracks, irregularities or other deformities are removed as an ordinary practice at a hatchery operation). Except for 210 eggs that were designated as untreated controls, the remaining 639 eggs were coated with either the liquid coating composition A or B in Table 3 and placed in setter trays. The liquid coating compositions were heated to temperatures between 29 to 38°C. Application of the coating compositions to the outer surface of the eggs consisted of pouring the liquid coating compositions over the eggs to achieve the complete coverage of the egg surface. After the liquid coating compositions dried, all trays of eggs were weighed. The eggs that were coated under Conditions 2 and 3 were rinsed by placing them into a water bath containing distilled water at a temperature of about 29 to about 41°C and swirled for 60 seconds (Coating A) or 90 seconds (Coating B). Coating B had a thicker coating and took longer to rinse. The Day 1 eggs were placed in an incubator for 21 days.

The next day 90 untreated and 371 coated eggs were set. The remaining eggs were placed in an egg storage cooler at 20°C for 20 days.

The test conditions used are summarized in Table 4. After 21 days of storage, coated eggs from Condition 2 and 3 were rinsed by placing them into a warm water bath containing distilled water at temperatures of from about 29 to about 41 °C and swirled for 60 seconds (Coating A) or 90 seconds (Coating B) before incubation. Coating B had a thicker coating and took longer to rinse. The Day 21 eggs were placed in an incubator for 21 days. This actually took about 23 days since older eggs can take longer to hatch.

The results shown in Table 5 demonstrated an increase in hatchability of coated eggs. Removing the egg coating under these conditions resulted in an increase in the eggs' hatchability as compared to controls.

TABLE 3

Liquid coating compositions

| Ingredient | Concentration (wt%) | |
|---|---|---|
| | Coating A | Coating B |
| Elvanol® 51-04 | 6.0 | 12 |

(continued)

Liquid coating compositions

| Ingredient | Concentration (wt%) | |
|---|---|---|
| | Coating A | Coating B |
| Polyethylene glycol 300 | 3.0 | 3.0 |
| Silwet L-77 | 0.02 | 0.02 |
| BTC® 885 | 0.15 | 0.15 |
| FD&C Blue No.1 | 0.01 | 0.01 |
| Deionized water | remainder | remainder |

TABLE 4

Test conditions

| Condition | Coating | wt% of Elvanol® 51-04 | Eggs rinsed prior to incubation | Number of eggs | |
|---|---|---|---|---|---|
| | | | | Day 1 | Day 21 |
| Control | none | none | No | 90 | 120 |
| 1 | A | 6 | No | 114 | 32 |
| 2 | A | 6 | Yes | 238 | 87 |
| 3 | B | 12 | Yes | 119 | 149 |

TABLE 5

Hatchability of viable eggs

| Condition | Coating | wt% of Elvanol® 51-04 | Eggs rinsed prior to incubation | Hatchability of viable eggs | |
|---|---|---|---|---|---|
| | | | | Day 1 | Day 21 |
| Control | none | None | No | 85% | 35% |
| 1 | A | 6 | No | 0% | 7% |
| 2 | A | 6 | Yes | 92% | 64% |
| 3 | B | 12 | Yes | 89% | 63% |

EXAMPLE 3

The need to rinse the eggs prior to incubation was found to be a function of the temperature of the liquid coating composition when applied to the eggs. This was shown by comparing the hatchability data from Example 2 **(Table 7)** with the data from this Example 3 **(Table 8).** The same coating compositions were used in both Examples which are shown in **Table 6.**

The data in **Table 7** demonstrated hatchability when a coating composition was applied to eggs at temperatures from about 29 to about 41°C. For the coating composition containing at least 6 wt% polyvinyl alcohol hatchability numbers were very low (0-7% in this Example) if the eggs were not rinsed.

For the data in **Table 8** the following experiment was conducted. 192 breeding eggs (Ross/Aviagen) were collected. The eggs were coated individually by heating about 125 mL of liquid coating composition to 49 °C and pouring it over each egg. 48 eggs were treated with each formulation and stored at 13°C. Of these, 24 treated eggs of each coating were taken out of storage the next day and were split into 2 groups of 12 eggs. One of the groups of 12 was rinsed with water. The other 12 were not rinsed. The 24 eggs of each condition were placed in an incubator. After 18 days, the eggs were moved to hatching baskets. The eggs were hatched and evaluated. After 14 days of storage, the rest of the eggs were removed and treated as described above.

In comparison, the data in **Table 8** showed that the coating composition containing at least 6 wt% polyvinyl alcohol when heated to 49 °C could be left on during incubation with no or little adverse effects on hatchability.

Cooler coating solutions were more viscous and therefore created thicker coatings. Without being limited to any one specific theory, it is believed that thicker coatings reduced the gas exchange between the egg and its external environment that resulted in reduced hatchability of the eggs.

TABLE 6

Liquid coating compositions

| Ingredient | Concentration (wt%) | |
|---|---|---|
| | Coating A | Coating B |
| Elvanol® 51-04 | 6.0 | 12.0 |
| Polyethylene glycol 300 | 3.0 | 3.0 |
| Silwet L-77 | 0.02 | 0.02 |
| BTC® 885 | 0.15 | 0.15 |
| FD&C Blue No.1 | 0.01 | 0.01 |
| Deionized water | remainder | remainder |

TABLE 7

Hatchability data for coating compositions at 29-41 °C

| Coating | Temperature of coating liquid (°C) | Wt% of Elvanol® 51-04 | Hatchability of viable eggs | | | |
|---|---|---|---|---|---|---|
| | | | Day 1 | | Day 21 | |
| | | | Unrinsed | Rinsed | Unrinsed | Rinsed |
| A | 29-41 | 6 | 0% | 92% | 7% | 64% |
| B | 29-41 | 12 | n.d. | 89% | n.d. | 63% |

TABLE 8

Hatchability data for coating compositions at 49°C

| Coating | Temperature of coating liquid (°C) | Wt% of Elvanol® 51-04 | Hatchability of viable eggs | | | |
|---|---|---|---|---|---|---|
| | | | Day 1 | | Day 15 | |
| | | | Unrinsed | Rinsed | Unrinsed | Rinsed |
| A | 49 | 6 | 82% | 100% | 80% | 82% |
| B | 49 | 12 | 100% | 100% | 10% | 89% |

EXAMPLE 4

48 breeding eggs (Ross/Aviagen) were collected and taken to the hatchery where they were stored at 20 °C. The next day, the eggs were coated individually by heating about 125 mL of liquid coating composition described in **Table 9** to 49 °C and pouring it over each egg. 24 eggs were treated with each formulation and stored. The next day, 12 treated eggs of each coating were rinsed with water. The 12 eggs of each condition were placed in an incubator. After 18 days, the eggs were moved to hatching baskets. The eggs were hatched and evaluated.

The other 12 of each coating were placed in storage at 20 °C for an additional 20 days. After 20 days, they were removed from storage and treated as described above. The test conditions are summarized in **Table 10.**

As can be seen from **Table 11,** the surfactant (in this Example Silwet L-77) proved to be important when the eggs were stored over a period of time.

The addition of the surfactant demonstrated an improvement in the hatchability. Without being limited to any one specific theory, it is believed that the addition of the surfactant improved the wetting behavior between the coating liquid and the egg which resulted in an improved hatchability.

TABLE 9

Liquid coating compositions

| Ingredient | Concentration (wt%) | |
|---|---|---|
| | Coating A | Coating B |
| Elvanol® 51-04 | 6.0 | 6.0 |

(continued)

Liquid coating compositions

| Ingredient | Concentration (wt%) | |
| --- | --- | --- |
| | Coating A | Coating B |
| Polyethylene glycol 300 | 3.0 | 3.0 |
| Silwet L-77 | 0.01 | - |
| BTC® 885 | 0.15 | 0.15 |
| FD&C Blue No.1 | 0.02 | 0.02 |
| Deionized water | Remainder | remainder |

TABLE 10

Test conditions

| Condition | Coating | Eggs rinsed prior to incubation | Number of eggs | |
| --- | --- | --- | --- | --- |
| | | | Day 1 | Day 21 |
| Control | none | Yes | 12 | 12 |
| 1 | B | Yes | 12 | 12 |
| 2 | A | Yes | 12 | 12 |

TABLE 11

Hatchability results

| Condition | Silicone surfactant (Silwet) | Eggs rinsed prior to incubation | Hatchability | |
| --- | --- | --- | --- | --- |
| | | | Day 1 | Day 21 |
| Control | No | Yes | 82% | 55% |
| 1 | No | Yes | 100% | 56% |
| 2 | Yes | Yes | 100% | 82% |

EXAMPLE 5

Broiler breeder hatching eggs (Heritage X) were used in the test. The eggs were laid and stored overnight at a temperature of about 20°C. The eggs were scrutinized for quality as described above and were placed in setter flats. The coating compositions (Table 12) were heated at temperature from about 29 to about 38°C.

A Surepip commercial egg washer (Surepip, Dallas, GA, USA) was used to spray the eggs with the coating solution. The sprayer has two zones: a wash zone and a sanitization zone. The wash zone contained 65 liters of tap water with enough bleach (5 wt%) to provide a residual concentration of 200 mg/L chlorine. The water was recycled. The sanitization zone was used to apply the coating to the eggs.

One set of eggs were coated using only the spray bars in the sanitizing zone of the egg washer while the wash zone was not used. For the other set of eggs, the wash zone was also used so the eggs were washed in the wash zone and coated in sanitization zone.

After the coating had dried, all trays of eggs were weighed and the eggs were stored at about 15 °C for 1, 7, 14, and 21 days.

After storage, coated eggs were rinsed with the egg washer where the wash water had a temperature of about 42 to about 46 °C. The spray bars of the sanitization zone sprayed fresh water containing 5 mg/L chlorine. After rinsing, the eggs were allowed to dry before they were placed in an incubator for 21 days. This took about 22 days for the eggs stored for 14 days and 23 days for the eggs stored for 21 days since older eggs can take longer to hatch. The test conditions are summarized in **Table 13.**

The results, summarized in **Table 14,** showed increased hatchability of treated eggs compared to the untreated control experiment.

Albumen height is an indicator of the health of the egg. The denser the albumen, the higher the yolk sits in the egg indicating a healthier egg. **Table 15** showed an improvement in the health of the egg.

The internal quality of an egg was measured by the Haugh unit as described earlier. A higher number means better quality of the egg. The data in **Table 16** demonstrated an improvement in egg quality compared to the untreated control experiment.

TABLE 12:

| | Coating composition |
|---|---|
| Ingredient | Concentration (wt%) Coating A |
| Elvanol® 51-04 | 9.0 |
| Polyethylene glycol 300 | 3.0 |
| Silwet L-77 | 0.02 |
| BTC® 885 | 0.15 |
| FD&C Blue No.1 | 0.01 |
| Deionized water | remainder |

TABLE 13
Test conditions

| Condition | Coating | Eggs prerinsed | Eggs rinsed prior to incubation | Number of eggs | | | |
|---|---|---|---|---|---|---|---|
| | | | | Day 1 | Day 7 | Day 14 | Day 21 |
| Control | none | No | No | 307 | 307 | 295 | 488 |
| 1 | A | No | Yes | 303 | 308 | 308 | 303 |
| 2 | A | Yes | Yes | 283 | 284 | 280 | 280 |

TABLE 14
Hatchability results

| Condition | Coating | Hatchability | | | |
|---|---|---|---|---|---|
| | | Day 1 | Day 7 | Day 14 | Day 21 |
| Control | none | 90% | 93% | 85% | 71% |
| 1 | A | 95% | 95% | 89% | 72% |
| 2 | A | 96% | 94% | 91% | 73% |

TABLE 15
Albumen height results

| Condition | Coating | Albumen height (mm) | | | |
|---|---|---|---|---|---|
| | | Day 1 | Day 7 | Day 14 | Day 21 |
| Control | none | 5.77 | 4.61 | 4.13 | 3.48 |
| 1 | A | 5.90 | 6.00 | 4.81 | 4.44 |
| 2 | A | 6.30 | 5.19 | 5.26 | 4.56 |

TABLE 16
Haugh unit results

| Condition | Coating | Haugh units (HU) | | | |
|---|---|---|---|---|---|
| | | Day 1 | Day 7 | Day 14 | Day 21 |
| Control | none | 74.9 | 66.6 | 65.6 | 52.7 |
| 1 | A | 77.0 | 76.4 | 68.2 | 65.3 |

(continued)

Haugh unit results

| Condition | Coating | Haugh units (HU) | | | |
|---|---|---|---|---|---|
| | | Day 1 | Day 7 | Day 14 | Day 21 |
| 2 | A | 79.4 | 71.4 | 73.4 | 66.5 |

**Claims**

1. A method for increasing the productivity of fertilized avian eggs comprising

   a) treating the egg's outer surface with a liquid coating composition comprising:

   i. an aqueous solvent
   ii. a film-forming coating agent; and
   iii. one or more surfactants;

   b) allowing said liquid coating composition to form a coating on the egg;
   c) rinsing the egg with an aqueous solution to remove the coating from the egg; and
   d) incubating the egg under conditions to cause hatching to occur;
   wherein the productivity of said avian eggs is increased as compared to control eggs not treated as defined in (a) to (c).

2. The method of claim 1 wherein said coating composition Is applied to the egg at a temperature of at least 5 °C higher than the temperature of the egg's outer surface.

3. The method of claim 1 wherein the surfactant provides a surface tension of the coating composition of between about 20 and about 50 mN/m.

4. The method of claim 1, further comprising 1) the step of rinsing the egg one or more times with an aqueous solvent prior to the application of the liquid coating composition, or 2) the step of storing the eggs for a period of between 1 and about 30 days after allowing the coating to form in step (b) and prior to removing the coating in step (c), or any combination of the above steps.

5. The method of claim 1 wherein said liquid coating composition further comprises an antimicrobial agent, or a colorant.

6. The method according to claim 1 wherein said film-forming coating agent is present at a level between 0.5 and 20 % by weight of the liquid coating composition.

7. The method according to claim 1 wherein said liquid coating composition is applied by dipping the egg into the composition or by spraying the composition on to the egg.

8. The method of claim 1 wherein the composition further comprises one or more additional components selected from the group consisting of: antimicrobial agents, colorants, rheology modifiers, crosslinking agents, plasticizers, solubilizing agents, antioxidants, pH adjusters, wetting agents, antifoaming agents, extenders, processing aids, additional performance-enhancing agents and mixtures thereof.

9. The method of claim 1 wherein the film-forming agent is polyvinyl alcohol or copolymers thereof in an amount of from 0.5 % by weight to 20 % by weight of the liquid coating composition, and the surfactant is a silicone-based surfactant in an amount from 0.001 % by weight to 0.5 % by weight of the liquid coating composition.

10. The method according to claim 6 wherein said film-forming coating agent is present at a level between 5% and 12 % by weight of the liquid coating composition.

**EP 2 381 766 B1**

**Patentansprüche**

1. Verfahren zum Erhöhen der Produktivität von befruchteten Geflügeleiern, umfassend

a) das Behandeln der Außenfläche des Eis mit einer flüssigen Beschichtungszusammensetzung umfassend:

i. ein wässriges Lösungsmittel
ii. ein filmbildendes Beschichtungsmittel und
iii. ein oder mehrere Tenside;

b) das Gestatten, dass die flüssige Beschichtungszusammensetzung eine Beschichtung auf dem Ei bildet;
c) das Spülen des Eis mit einer wässrigen Lösung, um die Beschichtung von dem Ei zu entfernen; und
d) das Ausbrüten des Eis unter Bedingungen zum Verursachen, dass das Ausschlüpfen erfolgt;
wobei die Produktivität der Geflügeleier im Vergleich mit Kontrolleiern, die nicht wie unter (a) bis (c) definiert behandelt worden sind, erhöht wird.

2. Verfahren nach Anspruch 1, wobei die Beschichtungszusammensetzung auf das Ei bei einer Temperatur aufgebracht wird, die mindestens 5 °C höher ist als die Temperatur der Außenfläche des Eis.

3. Verfahren nach Anspruch 1, wobei das Tensid eine Oberflächenspannung der Beschichtungszusammensetzung zwischen etwa 20 und etwa 50 mN/ bereitstellt.

4. Verfahren nach Anspruch 1, des Weiteren umfassend 1) den Schritt des Spülens des Eis einmal oder mehrere Male mit einem wässrigen Lösungsmittel vor dem Aufbringen der flüssigen Beschichtungszusammensetzung oder 2) den Schritt des Lagerns der Eier für eine Zeitspanne zwischen 1 und etwa 30 Tagen nach Gestatten, dass die Beschichtung sich in Schritt (b) bildet und vor dem Entfernen der Beschichtung in Schritt (c) oder irgendeiner Kombination der obigen Schritte.

5. Verfahren nach Anspruch 1, wobei die flüssige Beschichtungszusammensetzung des Weiteren ein antimikrobielles Mittel oder ein Farbmittel umfasst.

6. Verfahren nach Anspruch 1, wobei das filmbildende Beschichtungsmittel in einem Niveau zwischen 0,5 und 20 Gew.-%, auf die flüssige Beschichtungszusammensetzung bezogen, vorliegt.

7. Verfahren nach Anspruch 1, wobei die flüssige Beschichtungszusammensetzung durch Eintauchen des Eis in die Zusammensetzung oder durch Sprühen der Zusammensetzung auf das Ei aufgebracht wird.

8. Verfahren nach Anspruch 1, wobei die Zusammensetzung des Weiteren eine oder mehrere zusätzliche Komponenten umfasst ausgewählt aus der Gruppe bestehend aus: antimikrobiellen Mitteln, Farbmitteln, Rheologiemodifikatoren, Vernetzungsmitteln, Weichmachern, Löslichmachern, Antioxidationsmitteln, pH-Einstellungsmitteln, Benetzungsmitteln, Antischaummitteln, Streckmitteln, Verarbeitungshilfsmitteln, zusätzlichen leistungsverbessernden Mitteln und Mischungen davon.

9. Verfahren nach Anspruch 1, wobei das filmbildende Mittel Polyvinylalkohol oder Copolymere davon in einer Menge von 0,5 Gew.-% bis 20 Gew.-%, auf die flüssige Beschichtungszusammensetzung bezogen, ist und das Tensid ein Tensid auf Siliconbasis in einer Menge von 0,001 bis 0,5 Gew.-%, auf die flüssige Beschichtungszusammensetzung bezogen, ist.

10. Verfahren nach Anspruch 6, wobei das filmbildende Beschichtungsmittel in einem Niveau zwischen 5 und 12 Gew.-%, auf die flüssige Beschichtungszusammensetzung bezogen, vorliegt.

**Revendications**

1. Procédé d'augmentation de la productivité d'oeufs fertilisés de volaille comprenant

a) le traitement de la surface externe de l'oeuf avec une composition d'enrobage liquide comprenant:

17

i. un solvant aqueux

ii. un agent d'enrobage formant film; et

iii. un ou plusieurs tensioactif(s);

b) le fait de laisser ladite composition liquide d'enrobage pour former un revêtement sur l'oeuf;

c) le rinçage de l'oeuf avec une solution aqueuse pour retirer l'enrobage de l'oeuf; et

d) l'incubation de l'oeuf sous des conditions entraînant l'éclosion;

dans lequel la productivité desdits oeufs de volaille est augmentée comparativement à des oeufs témoins non traités tel que défini aux points (a) à (c).

2. Procédé selon la revendication 1 dans lequel ladite composition d'enrobage est appliquée à l'oeuf à une température d'au moins 5°C supérieure à la température de la surface externe de l'oeuf.

3. Procédé selon la revendication 1 dans lequel le tensioactif fournit une tension superficielle de la composition d'enrobage comprise entre environ 20 et environ 50 mN/m.

4. Procédé selon la revendication 1, comprenant en outre 1) l'étape de rinçage de l'oeuf une ou plusieurs fois avec un solvant aqueux avant l'application de la composition liquide d'enrobage, ou 2) l'étape de stockage des oeufs sur une durée comprise entre 1 et environ 30 jours après avoir laissé l'enrobage se former dans l'étape (b) et avant de retirer l'enrobage dans l'étape (c), ou n'importe quelle combinaison des étapes ci-dessus.

5. Procédé selon la revendication 1 dans lequel ladite composition liquide d'enrobage comprend en outre un agent antimicrobien, ou un colorant.

6. Procédé selon la revendication 1 dans lequel ledit agent d'enrobage formant film est présent à une teneur comprise entre 0,5 et 20 % en poids de la composition liquide d'enrobage.

7. Procédé selon la revendication 1 dans lequel ladite composition liquide d'enrobage est appliquée par immersion de l'oeuf dans la composition ou par pulvérisation de la composition sur l'oeuf.

8. Procédé selon la revendication 1 dans lequel la composition comprend en outre un ou plusieurs composant(s) supplémentaire(s) sélectionné(s) parmi le groupe constitué des agents antimicrobiens, des colorants, des agents de modification de la rhéologie, des agents de réticulation, des plastifiants, des agents de solubilisation, des antioxydants, des agents d'ajustement du pH, des agents mouillants, des agents anti-mousses, des agents d'extension, des auxiliaires de transformation, des agents d'amélioration supplémentaires de la performance et de leurs mélanges.

9. Procédé selon la revendication 1 dans lequel l'agent formant film est le poly(alcool de vinyle) ou des copolymères de celui-ci en une quantité de 0,5 % à 20 % en poids de la composition liquide d'enrobage, et le tensioactif est un tensioactif à base de silicone en une quantité de 0,001 % en poids à 0,5 % en poids de la composition liquide d'enrobage.

10. Procédé selon la revendication 6 dans lequel ledit agent d'enrobage formant film est présent en une teneur comprise entre 5 % et 12 % en poids de la composition liquide d'enrobage.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008084485 A

**Non-patent literature cited in the description**

- **SPENCER ; BECKER.** *Washington Farm Electrification Committee, Annual Progress Report,* 1970, vol. 46, 1-2
- **XIE et al.** *J. Food Sci.,* 2002, vol. 67, 280-284
- **WONG et al.** *Poultry Sci.,* 1996, vol. 75, 417-422
- **E.-R. KENAWY ; Y. A.-G. MAHMOUD.** Biologically active polymers, 6: Synthesis and antimicrobial activity of some linear copolymers with quaternary ammonium and phosphonium groups. *Macromol. Biosc.,* 2003, vol. 3, 107-116
- **D. M. MARMION.** Handbook of U.S. Colorants, Foods, Drugs, Cosmetics and Medical Devices. John Wiley & Sons Inc, 1991
- Acusol 823. Rohm and Haas